(19) Europäisches Patentamt
European Patent Office
Office européen des brevets

(11) **EP 2 854 103 A1**

(12) **EUROPEAN PATENT APPLICATION**

(43) Date of publication:
**01.04.2015 Bulletin 2015/14**

(51) Int Cl.:
***G06T 5/00*** (2006.01)

(21) Application number: **14187122.8**

(22) Date of filing: **30.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.09.2013 KR 20130116893**

(71) Applicant: **Samsung Electronics Co., Ltd Gyeonggi-do 443-742 (KR)**

(72) Inventors:
• **Kang, Byongmin**
  **443-803 Gyeonggi-do (KR)**
• **Choi, Ouk**
  **443-803 Gyeonggi-do (KR)**

(74) Representative: **Portch, Daniel**
  **Elkington and Fife LLP**
  **Prospect House**
  **8 Pembroke Road**
  **Sevenoaks, Kent TN13 1XR (GB)**

(54) **Method of decreasing noise of a depth image, image processing apparatus and image generating apparatus using thereof**

(57) Provided are a method of decreasing the noise of a depth image which predicts the noise for each pixel of the depth image using the difference in depth values of two adjacent pixels of the depth image and the reflectivity of each pixel of an intensity image, and an image processing apparatus and an image generating appara-tus that use the method.

FIG. 1

EP 2 854 103 A1

**Description**

FIELD OF THE INVENTION

One or more embodiments of the present disclosure relate to a method of decreasing noise of a depth image and an image processing apparatus an image generating apparatus for using the method.

BACKGROUND OF THE INVENTION

As a method of acquiring the depth image of a subject, a Time of Flight (ToF) method utilizes the return time of an infrared beam reflected after being irradiated to the subject. A ToF depth camera utilizing such method may possess an advantage that the depth of the subject may be acquired in real-time for all pixels when compared with other conventional cameras such as a stereo camera and a structured light camera obtaining a depth image of the subject.

A depth image of Time of Flight (ToF) method may be obtained by utilizing the phase difference between the infrared signal shot to the subject and the reflected signal of the infrared signal return after reflection from the subject. However, the depth image obtained by this method may have noise and thus studies have been performed to eliminate this noise.

SUMMARY OF THE INVENTION

Additional aspects and/or advantages will be set forth in part in the description which follows and, in part, will be apparent from the description, or may be learned by practice of the disclosure.

Provided are a method of decreasing noise of a depth image by using the depth image and a corresponding intensity image and a recording medium on which the method is recorded, and an image processing apparatus and an image generating apparatus. Additional aspects will be set forth in part in the description which follows and, in part, will be apparent from the description, or may be learned by practice of the presented embodiments.

According to an aspect of the present disclosure, the method of decreasing noise of the depth image which represents the distance between the image shooting apparatus and the subject includes obtaining the intensity image representing the reflectivity of the subject and the depth image corresponding to the intensity image, predicting noise of each pixel of the depth image using the difference in the depth values of two adjacent pixels in the obtained depth image and the reflectivity of each pixel in the intensity image, and eliminating noise of the depth image considering the anticipated noise.

According to another aspect of the present disclosure, a computer-readable recording medium having recorded thereon a program for executing the method on the computer to decrease noise of the depth image according to another aspect of the present disclosure is proved.

According to another aspect of the present disclosure, the image processing apparatus which decreases noise of the depth image representing the distance between the image pickup apparatus and the subject includes the intensity image acquisition unit obtaining the intensity image representing the reflectivity of the subject, the noise prediction unit predicting noise of each pixel of the depth image by use of the difference in the depth values of two adjacent pixels in the depth image obtained and the reflectivity of each pixel of the intensity image, and the noise elimination unit eliminating noise of the depth image by consideration of the predicted noise

According to another aspect of the present disclosure, the image generating apparatus includes the image pickup apparatus detecting the image signal about the subject using the return reflection beam reflected from the subject after a predetermined amount of beam is irradiated to the subject, and the image processing apparatus wherein the intensity image, which represents the depth image representing the distance between the image pickup apparatus and the subject, and the reflectivity of the subject, is obtained from the detected image signal, the noise is predicted for each pixel of the depth image using the difference in the depth values of two adjacent pixels in the depth image obtained, and the reflectivity of each pixel in the intensity image, and the image processing apparatus eliminating the noise of the depth image considering the predicted noise.

As described above, according to the one or more of the above embodiments of the present disclosure, using each depth image and corresponding intensity image, the noise of the depth image may be predicted, and using this result in the time of noise elimination, the noise of the depth image may be easily and quickly decreased.

BRIEF DESCRIPTION OF THE EMBODIMENTS

These and/or other aspects will become apparent and more readily appreciated from the following description of the embodiments, taken in conjunction with the accompanying drawings in which:

FIG. 1 is a diagram of an image generating apparatus according to one or more embodiments;

FIG. 2 illustrates a block diagram of a noise prediction unit of the image processing apparatus according to one or more embodiments;

FIG. 3 illustrates a diagram explaining the difference between the depth value of each pixel and the depth value of two adjacent pixels of the depth image;

FIG. 4 illustrates a block diagram of the noise prediction unit of the image processing apparatus, according to one or more embodiments;

FIG. 5 illustrates a flowchart of a method of decreasing noise of the depth image, according to one or more embodiments;

FIG. 6 illustrates a detailed flowchart of predicting the noise for each pixel of the depth image in the method of decreasing noise of the depth image, according to one or more embodiments;

FIG. 7 illustrates a detailed flowchart of the prediction of the noise for each pixel of the depth image in the method of decreasing noise of the depth image according to one or more embodiments; and

FIG. 8 illustrates a table explaining the method of decreasing noise of the depth image according to one or more embodiments or the decreased result of the noise of the depth image by the image processing apparatus using the decreasing method.

DETAILED DESCRIPTION OF THE DRAWINGS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

It should be understood that the exemplary embodiments described therein should be considered in a descriptive sense only and not for purposes of limitation. Descriptions of features or aspects within each embodiment should typically be considered as available for other similar features or aspects in other embodiments.

While one or more embodiments of the present disclosure have been described with reference to the figures, it will be understood by those of ordinary skill in the art that various changes in form and details may be made therein without departing from the spirit and scope of the present disclosure as defined by the following claims.

Embodiments of the present disclosure relate to the method of decreasing noise of the depth image, and the image processing apparatus, and the image generating apparatus using thereof. Among technology areas related to the embodiments below of the present disclosure, a detailed explanation of issues widely known to one with conventional knowledge is omitted.

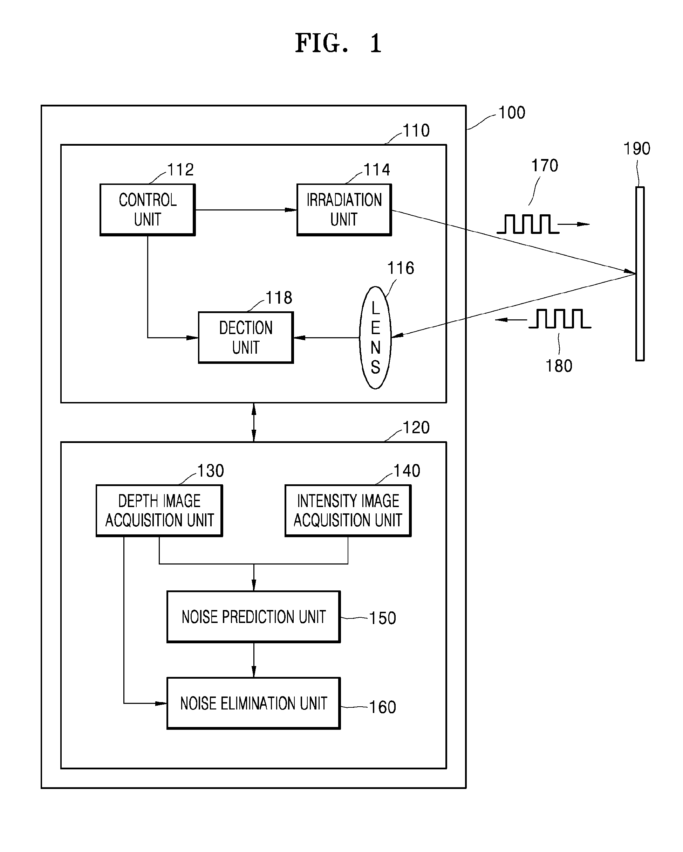

FIG. 1 is a diagram of an image generating apparatus 100 according to one or more embodiments.

Referring to FIG. 1, the image generating apparatus 100 includes an image pickup apparatus 110 and an image processing apparatus 120. The image pickup apparatus 110 may include a control unit 112, an irradiation unit 114, a lens 116, and a detection unit 118. The image processing apparatus 120 may include a depth image acquisition unit 130, an intensity image acquisition unit 140, a noise prediction unit 150, and a noise elimination unit 160. The image generating apparatus 100, the image pickup apparatus 110, and the image processing apparatus 120 illustrated in FIG. 1 illustrate component factors only according to one or more embodiments. Thus, one with ordinary skill in the art understands that other general-purpose components than the ones illustrated in FIG. 1 may be included. Hereinafter, referring to FIG. 1, the functions of components included in the image generating apparatus 100, the image pickup apparatus 110, and the image processing apparatus 120 are explained in detail.

The image generating apparatus 100 may include the image pickup apparatus 110 picking up the image and the image processing apparatus 120 performing the image processing on the picked-up image signal.

As illustrated in FIG. 1, the image pickup apparatus 110 may include the irradiation unit 114, the lens 116, the detection unit 118, and the control unit 112 controlling these units. The image pickup apparatus 110 may, as a method of acquiring the depth image of the subject 190, use a Time of Flight (ToF) method which uses the return time of an irradiated Infrared Ray (IR)) beam reflected after the IR is irradiated to the subject.

The irradiation unit 114, when the image generating apparatus 100 generates the image of the subject 190, may irradiate a beam with a predetermined frequency range to the subject 190. In more detail, the irradiation unit 114, with a controlled signal of the control unit 112 as a reference, irradiates an irradiation beam 170 modulated to a predetermined frequency. The irradiation unit 114 may include an LED array or a laser apparatus.

The depth image representing the distance between the subject 190 and the image pickup apparatus 110 may be obtained by using the infrared beam (more specifically, a near-infrared beam). Thus, when the image generating apparatus 100 generates the depth image, the irradiation unit 114 may irradiate the irradiation beam 170 at a predetermined frequency relevant to the near-infrared beam to the subject 190.

A color image of the subject 190 may be obtained by using the solar visible beam.

The lens 116 concentrates the beam reaching the image pickup apparatus 110. In more detail, the lens 116 obtains the beam, including the reflection beam 180 which is reflected from the subject 190, and transmits the obtained beam to the detection unit 118. Between the lens 116 and the detection unit 118 or between the lens 116 and the subject 119 a filtering unit (not illustrated) may be located.

The filtering unit (not illustrated) obtains the beam in the predetermined frequency range from the beam reaching the image pickup apparatus 110. The filtering unit may include a multiple number of band-pass filters which may pass the beam with up to twice the frequency range. The beam with the predetermined frequency range may be either the visible beam or the infrared beam.

The color image is generated by use of the visible beam, and the depth image is generated by using the infrared beam. On the other hand, the beam reaching the image pickup apparatus 110 includes the reflection beam 180 reflected from the subject 190, and the visible beam as well as the infrared beam, and the beam in the different frequency range. Thus, the filtering unit eliminates the beam in the other frequency range except for the visible beam and the infrared beam from the beam including the reflection beam 180. The frequency range of the visible beam may be 350 nm up to 700 nm, and the frequency range of the infrared beam may be near 850 nm, but are not limited as such.

The detection unit 118 photo-electrically transforms the reflection beam 180 with the predetermined frequency range and detects an image signal. The detection unit 180 may photo-electrically transform a single beam with predetermined frequency range or two beams with different frequency ranges and transmit the detected image signal to the image processing apparatus 120.

The detection unit 118 may include a photo-diode array or a photo-gate array. In this case, a photo-diode may be a pin-photo diode, but is not limited thereto.

The detection unit 118 may transmit the image signal detected by photo-diode circuits with the predetermined phase difference to the image processing apparatus 120.

The image processing apparatus 120 illustrated in FIG. 1 may include the depth image acquisition unit 130, the intensity image acquisition unit 140, the noise prediction unit 150, and the noise elimination unit 160, and may include one or multiple number of processors. The processor may be formed by an array of logic gates, and may be formed by a combination of a general-purpose microprocessor and a memory where a program that is executable in the microprocessor is stored. Also, one with ordinary skill in the art understands that other types of hardware may be used.

The depth image acquisition unit 130, using the image signals detected with predetermined phase differences, may obtain the depth image representing the distance between the subject 190 and the image pickup apparatus 110. For example, using an image signal with a phase of 0° and image signals with phase differences of 90°, 180°, and 270° with respect to the image signal with a phase of 0°, the depth image may be obtained from image signals with four different phases. Since the depth image obtained by the depth image acquisition unit 130 is transmitted to both the noise prediction unit 150 and the noise elimination unit 160, the depth image used for the noise prediction and the depth image from which noise is eliminated are the same image.

The intensity image acquisition unit 140, using the image signals detected with the predetermined phase difference, may obtain the intensity image representing the reflectivity of the subject 190. For example, using an image signal with a phase of 0° and image signals with phase difference of 90°, 180°, and 270° with respect to the image signal with a phase of 0°, the intensity image may be obtained from image signals with four different phases.

Since the image signals detected with the predetermined phase differences are transmitted from the detection unit 180 of the image pickup apparatus 110 to the depth image acquisition unit 130 and the intensity image acquisition unit 140, respectively, the depth image obtained in the depth image acquisition unit 130 and the intensity image obtained in the intensity image acquisition unit 140 correspond to each other.

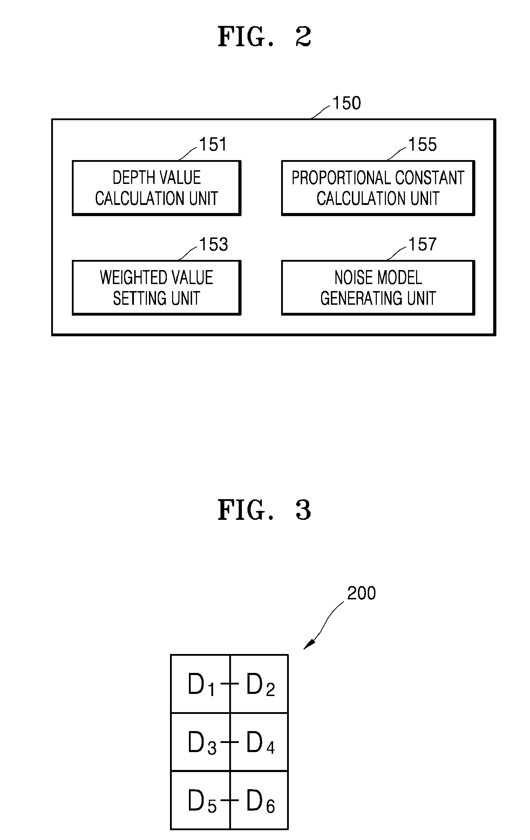

The noise prediction unit 150, using the depth image obtained in the depth image acquisition unit 130 and the intensity image obtained in the intensity image acquisition unit 140, may predict the noise of each pixel of the depth image. Particularly, using both the depth image and the intensity image corresponding to the depth image, the noise of each pixel of the depth image may be predicted. Hereinafter, referring to FIG. 2, the noise prediction unit 150 is explained in detail.

FIG. 2 is a block diagram of the noise prediction unit 150 of the image processing apparatus 100, according to one or more embodiments. Referring to FIG. 2, the noise prediction unit 150 may include a depth value calculation unit 151, a weighted value setting unit 153, a proportional constant calculation unit 155, and a noise model generating unit 157. The fact that other general-purpose composition factors other than composition factors illustrated in FIG. 2 may be further included may be understood by one with conventional knowledge in the technology area related to technology according to an embodiment of the present disclosure.

First, according to an embodiment of the present disclosure a theoretical basis applied to predict the noise of the depth image is explained, and the noise prediction unit 150 using the result is explained.

In the image pickup apparatus 110 using the Time of Flight (ToF) method, as a method of obtaining the depth image which uses the return time of the irradiated infrared beam reflected after the IR is irradiated to the subject, noise σ for the depth value of each pixel is generally calculated as follows:

[Mathematical formula 1]

$$\sigma = \frac{L}{\sqrt{8}} \cdot \frac{\sqrt{B}}{2 \cdot A}$$

The noise σ for the depth value of each pixel is proportional to the maximum measured distance **L** and the environment light **B,** and inversely proportional to the reflectivity

**A** of the subject 190. In this case, when the environment light **B** is equally applied to all pixels, mathematical formula 1 above may be expressed in a simple form of a multiple of the proportional constant **C.** In other words, the noise **C** for the depth value of each pixel may be expressed as a multiple of the inverse of the reflectivity **A** of a corresponding pixel and the proportional constant **C.**

[Mathematical formula 2]

$$\sigma = C \cdot \frac{1}{A}$$

According to an embodiment of the present disclosure, the noise of the depth image may be predicted by calculating the proportional constant **C** by only using both the depth image and the intensity image corresponding thereof.

When the depth value of an arbitrary pixel of the depth image has a Gaussian distribution, the depth value **D** of an arbitrary pixel may be expressed as follows:

[Mathematical formula 3]

$$D \sim N(\mu, \sigma^2)$$

In this case, $\mu$ is the average of the measured depth values, and $\sigma^2$ is the dispersion of the measured depth values, that is, represents noise information. Here, when the depth values of adjacent pixels are similar, for example, when the average is assumed to be the same, the difference in depth values of two adjacent pixels may be regarded as possessing the Gaussian distribution also, which may be expressed as follows:

[Mathematical formula 4]

$$D_1 - D_2 \sim N(0, \sigma_1^2 + \sigma_2^2)$$

$D_1$ represents the depth value of a first pixel and $D_2$ represents the depth value of a second pixel, and $D_1 - D_2$ represents the difference between the depth value of the first pixel and the depth value of the second pixel adjacent to the first pixel. When the average of depth values of two pixels is the same, the average of the difference in depth values of two adjacent pixels becomes zero. The dispersion of the difference of the depth values of two adjacent pixels may be expressed as the sum of the distribution of the depth value of each pixel.

The number of pixels generally included in the depth image generally is much greater than 2, and thus, the difference of the depth values of two adjacent pixels may be a multiple number also. Hereinafter, referring to FIG. 3, the case wherein the difference between depth values of two adjacent pixels is a multiple number is described.

FIG. 3 is a diagram for describing the depth value of each pixel composing the depth image and the difference between the depth values of two adjacent pixels. Referring to FIG. 3, a depth image 200 is composed of 6 pixels. As described above, when the depth value of each pixel follows the Gaussian distribution and the adjacent pixels have similar values, the difference between depth values of two adjacent pixels may be expressed as follows:

[Mathematical formula 5]

$$\delta_1 = D_1 - D_2 \sim N(0, \sigma_1^2 + \sigma_2^2)$$
$$= N(0, \frac{C^2}{A_1^2} + \frac{C^2}{A_2^2})$$

[Mathematical formula 6]

$$\delta_2 = D_3 - D_4 \sim N(0, \sigma_3^2 + \sigma_4^2)$$
$$= N(0, \frac{C^2}{A_3^2} + \frac{C^2}{A_4^2})$$

[Mathematical formula 7]

$$\delta_3 = D_5 - D_6 \sim N(0, \sigma_5^2 + \sigma_6^2)$$
$$= N(0, \frac{C^2}{A_5^2} + \frac{C^2}{A_6^2})$$

$\delta_1$ represents the difference between the depth value of the first pixel and the depth value of the second pixel adjacent to the first pixel, and $\delta_2$ represents the difference between the depth value of a third pixel and the depth value of fourth pixel adjacent to the third pixel, and $\delta_3$ represents the difference between the depth value of fifth pixel and the depth value of sixth pixel adjacent to the fifth pixel.

Here, the dispersion about the difference between depth values of two adjacent pixels may be expressed as below by use of the probability variables.

[Mathematical formula 8]

$$Var(\Delta) = E[\Delta^2] - E[\Delta]^2 = E[\Delta^2]$$

In this case, $\Delta$ represents the probability variable of the difference $\delta$ of depth values of two adjacent pixels. Since a case where the depth values of adjacent pixels are similar is assumed above, $E[\Delta]$ becomes zero, and finally $E[\Delta^2]$ only remains. In other words, the dispersion about the difference between depth values of two adjacent pixels may be the same as the calculation result of averaging the squares of the difference $\delta$ of depth values of two adjacent pixels. Thus, the dispersion $E[\Delta^2]$ for the difference $\delta$ of depth values of two adjacent pixels may be calculated as follows:

[Mathematical formula 9]

$$E[\Delta^2] = \frac{1}{3}\left[\delta_1^2 + \delta_2^2 + \delta_3^2\right]$$

$$= \frac{1}{3}\left[(D_1 - D_2)^2 + (D_3 - D_4)^2 + (D_5 - D_6)^2\right]$$

On the other hand, as shown in mathematical formulas 5 through 7, $\delta_1$, $\delta_2$, and $\delta_3$ which, respectively, represent the difference of depth values of two adjacent pixels have individual dispersion values. According to an embodiment of the present disclosure, for these dispersion values, the dispersion $E[\Delta^2]$ for the difference $\delta$ of depth values of two adjacent pixels is calculated by using either an arithmetic average or a weighted average. First, using the arithmetic average, $E[\Delta^2]$ may be expressed as below;

[Mathematical formula 10]

$$\frac{C^2}{3}\left[\frac{1}{A_1^2} + \frac{1}{A_2^2} + \frac{1}{A_3^2} + \frac{1}{A_4^2} + \frac{1}{A_5^2} + \frac{1}{A_6^2}\right]$$

In mathematical formula 10, '3' is a constant for arithmetic averaging of three dispersion values.

As another example, using the weighted average, $E[\Delta^2]$ may be expressed as follows:

[Mathematical formula 11]

$$\frac{C^2}{(\alpha+\beta+\gamma)}\left[\alpha\left(\frac{1}{A_1^2}+\frac{1}{A_2^2}\right)+\beta\left(\frac{1}{A_3^2}+\frac{1}{A_4^2}\right)+\gamma\left(\frac{1}{A_5^2}+\frac{1}{A_6^2}\right)\right]$$

Here, $\alpha$, $\beta$, and $\gamma$ represent weighted values. A case where the depth values of adjacent pixels are similar is assumed above. When the dispersion $E[\Delta^2]$ for the difference $\delta$ of depth values of two adjacent pixels is calculated by using the weighted average, the weighted average may be calculated by applying the weighted value based on the similarity between depth values of adjacent pixels. For example, when the difference between depth values of two adjacent pixels becomes bigger, in other words, when the similarity between depth values of adjacent pixels becomes lower, the weighted value may be set as low. On the other hand, when the difference between depth values of two adjacent pixels becomes smaller, in other words, when the similarity between depth values of adjacent pixels becomes higher, the weighted value may be set as high.

The result of arithmetic averaging of mathematical formula 10 is a special case of the result of the weighted averaging of mathematical formula 11, and both are the same when all the weighted value are set as 1.

Here, the dispersion for the difference between depth values of two adjacent pixels may be expressed as the difference between depth values of adjacent pixels by using the probability variables.

Mathematical formulas 11 and 9 individually calculate the dispersion $E[\Delta^2]$ for the difference $\delta$ of depth values of two adjacent pixels, and using these results an expression may be obtained as below;

[Mathematical formula 12]

$$\frac{1}{3}\left[(D_1-D_2)^2+(D_3-D_4)^2+(D_5-D_6)^2\right]$$

$$=\frac{C^2}{(\alpha+\beta+\gamma)}\left[\alpha\left(\frac{1}{A_1^2}+\frac{1}{A_2^2}\right)+\beta\left(\frac{1}{A_3^2}+\frac{1}{A_4^2}\right)+\gamma\left(\frac{1}{A_5^2}+\frac{1}{A_6^2}\right)\right]$$

When mathematical formula 12 is arranged as a formula for the proportional constant $C$, an expression may be obtained as below;

[Mathematical formula 13]

$$\sqrt{\frac{\frac{1}{3}\left[(D_1-D_2)^2+(D_3-D_4)^2+(D_5-D_6)^2\right]}{\frac{1}{(\alpha+\beta+\gamma)}\left[\alpha\left(\frac{1}{A_1^2}+\frac{1}{A_2^2}\right)+\beta\left(\frac{1}{A_3^2}+\frac{1}{A_4^2}\right)+\gamma\left(\frac{1}{A_5^2}+\frac{1}{A_6^2}\right)\right]}}$$

When mathematical formula 13 is expressed in a general formula, an expression may be obtained as follows:

[Mathematical formula 14]

$$C = \sqrt{\frac{\frac{1}{M}\sum_i\left(\sum_{j\in N_i}(D_i - D_j)^2\right)}{\frac{1}{W}\sum_i\left(\sum_{j\in N_i}\left(w(i,j)\cdot\left[\frac{1}{A_i^2}+\frac{1}{A_j^2}\right]\right)\right)}}$$

$N_i$ is a combination of surrounding pixels centered around the *i* th pixel, and an arbitrary adjacent pixel included in $N_i$ may be expressed as the *j* th pixel.

$D_i$ represents the depth value of the *i* th pixel of the depth image, and $D_j$ represents the depth value of the *j* th pixel among surrounding pixels centered around the *i* th pixel. $A_i$ represents the reflectivity of the *i* th pixel of the intensity image, and $A_j$ represents the reflectivity of the *j* th pixel among surrounding pixels centered around the *i* th pixel. *M* represents the total number of pairs used to calculate the difference $\delta$ of depth values of two adjacent pixels, when the *i* th pixel and the *j* th pixel adjacent thereto are considered as a pair. *w(i, j)* represents the weighted value for the *i* th pixel and the *j* th pixel adjacent thereto, and *W* represents a sum of the total weighted values. Here, *W* may be expressed as follows:

[Mathematical formula 15]

$$W = \sum_i\left(\sum_{j\in N_i}w(i,j)\right)$$

On the other hand, when all of the weighted values *w(i, j)* are set as 1 in mathematical formula 14, mathematical formula 14 becomes a generalized formula to calculate the proportional constant *C* by using the arithmetic average instead of the weighted average in mathematical formula 12, which may be expressed as follows:

[Mathematical formula 16]

$$C = \sqrt{\frac{\sum_i \left( \sum_{j \in N_i} (D_i - D_j)^2 \right)}{\sum_i \left( \sum_{j \in N_i} \left( \frac{1}{A_i^2} + \frac{1}{A_j^2} \right) \right)}}$$

As previously seen in mathematical formula 2, the noise $\sigma$ for the depth value of each pixel of the depth image may be expressed as a multiple of the inverse of the reflectivity *A* of the corresponding pixel and the proportional constant *C,* and using the calculation formula for the proportional constant *C,* which is derived for an embodiment of the present disclosure, the modeling of the noise $\sigma$ for the depth value of each pixel of the depth image may be performed. In other words, according to an embodiment of the present disclosure the noise for depth value of each pixel of the depth image may be predicted using the calculation result of the proportional constant *C* as in mathematical formula 14 or 16, and the noise of the depth image may be eliminated considering the predicted noise.

Referring to FIG. 2, the noise prediction unit 150 may include the depth value calculation unit 151, the weighted value setting unit 153, the proportional constant calculation unit 155, and the noise model generating unit 157. To the noise prediction unit 150 the depth image from the depth image acquisition unit 130 and both the intensity image from the intensity image acquisition unit 140 may be entered.

The noise model generating unit 157 may perform the modeling of the noise for the depth value of each pixel of the depth image, as described in mathematical formula 1, as a multiple of the inverse of the reflectivity *A* of a relevant pixel in the intensity image corresponding to the depth image and the proportional constant *C*. The proportional constant *C* may be calculated by the proportional constant calculation unit 155, and to this end, the depth value calculation unit 151 and the weighted value setting unit 153 may be utilized.

The depth value calculation unit 151 may calculate the difference of depth values of two adjacent pixels in the depth image. For example, the depth value calculation unit may calculate each depth value of an arbitrary pixel and adjacent surrounding pixels centered around the arbitrary pixel and the difference in the depth values. Also, the depth value calculation unit 151 may calculate the difference in the depth values of two adjacent pixels while moving the location of the arbitrary pixel in the depth image according to a predetermined rule or a sequence. The difference in the depth values of two adjacent pixels, which is calculated in the depth value calculation unit 151, may be stored in a memory (not illustrated) of the image processing apparatus 120 or the noise prediction unit 150.

The weighted value setting unit 153 may set the weighted value based on the similarity between depth values of two adjacent pixels. In other words, the weighted value may be set, considering the difference in the depth values of two adjacent pixels. For example, when the difference in the depth values of two adjacent pixels becomes bigger, in other words, when the similarity between depth values of adjacent pixels becomes lower, the weighted value may be set as low. To the contrary, when the difference in the depth values of two adjacent pixels becomes smaller, in other words, when the similarity between depth values of adjacent pixels becomes higher, the weighted value may be set as high. The weighted value setting unit 153 may set the weighted value, using the difference in the depth values of two adjacent pixels which is calculated in the depth value calculation unit 151.

The proportional constant calculation unit 155 calculates the proportional constant used for the modeling of the noise of each pixel of the depth image, using the difference in the depth values of two adjacent pixels which is calculated in the depth value calculation unit 151 and the weighted value for two adjacent pixels which is set in the weighted value setting unit 153. The formula for calculating the proportional constant by using the weighted value is described above using mathematical formula 14. The proportional constant calculation unit 155 may obtain the pixel reflectivity corresponding to each pixel of the depth image from the input intensity image, and use the pixel reflectivity to calculate the proportional constant *C*.

The noise model generating unit 157 may obtain the proportional constant *C* which is calculated in the proportional constant calculation unit 155 and the pixel reflectivity *A* corresponding to each pixel of the depth image from the intensity image, and perform the modeling of the noise for the depth value of each pixel of the depth image as the multiple of the inverse of the reflectivity *A* of a relevant pixel and the proportional constant *C*. The noise model generated in the noise model generating unit 157 may represent the noise for the depth value of each pixel of the depth image, and have values varying per pixel. The noise prediction unit 150 may use the noise model generated in the noise model generating unit 157 as the noise for the depth value of each pixel of the depth image.

The noise prediction unit 150 may simply and swiftly decrease the noise of the depth image by predicting the noise for each pixel of the depth image with only both the depth image and the intensity image corresponding thereto. While there is an inconvenience due to the necessity of the noise prediction by performing hundreds up to tens of thousands of pickup tests whenever parts in the image pickup apparatus 110 are replaced in case hundreds up to tens of thousands of pickup tests are needed for the prediction of the noise of the depth image, the noise elimination of the depth image may be possible thanks to the swift noise prediction according to an embodiment of the present disclosure, even though parts of the image pickup apparatus 110 are replaced.

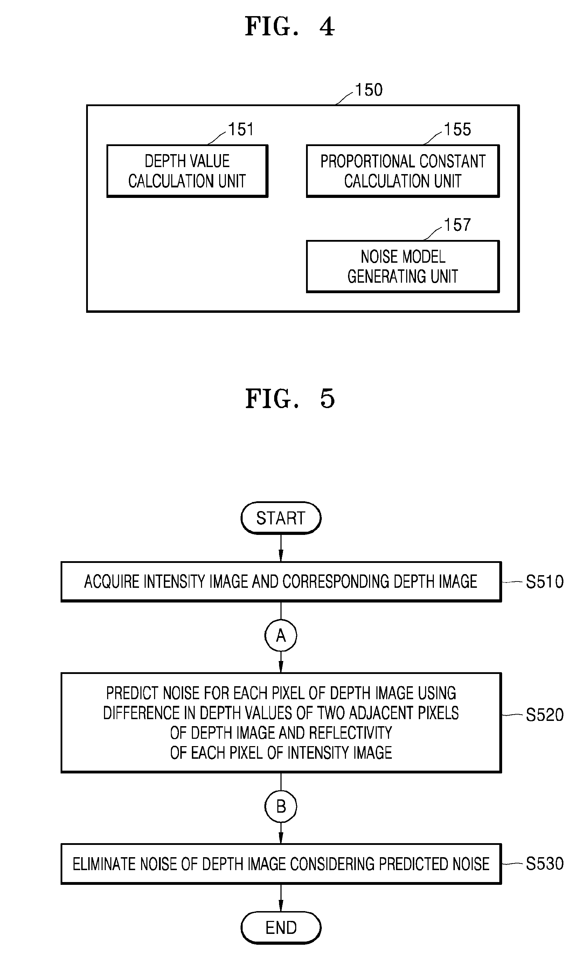

FIG. 4 is a block diagram of the noise prediction unit 150 in the image processing apparatus 120, according to one or more embodiments. Referring to FIG. 4, the noise prediction unit 150 may include the depth value calculation unit 151, the proportional constant calculation unit 155, and the noise model generating unit 157. When compared with the noise prediction unit 150 in FIG. 2, it may be identified that the weighted value setting unit 153 is excluded.

The depth value calculation unit 151 may calculate the difference of depth values of two adjacent pixels in the depth image. For example, the depth value calculation unit 151 may calculate each depth value of an arbitrary pixel and adjacent surrounding pixels centered around the arbitrary pixel and the difference in the depth values. Also, the depth value calculation unit 151 may calculate the difference in the depth values of two adjacent pixels while moving the location of the arbitrary pixel in the depth image according to a predetermined rule or a sequence. The difference in the depth values of two adjacent pixels, which is calculated in the depth value calculation unit 151, may be stored in a memory (not illustrated) of the image processing apparatus 120 or the noise prediction unit 150.

The proportional constant calculation unit 155 calculates the proportional constant needed for the modeling of the noise of each pixel of the depth image, using the difference in the depth values of two adjacent pixels which is calculated in the depth value calculation unit 151 and the pixel reflectivity corresponding to each pixel of the depth image from the intensity image. The weighted values for two adjacent pixels are not separately set according to an embodiment of the present disclosure, and the formula which calculates the proportional constant is described above using mathematical formula 16.

The noise model generating unit 157 may obtain the proportional constant *C* which is calculated in the proportional constant calculation unit 155 and the pixel reflectivity *A* corresponding to each pixel of the depth image from the intensity image, and perform the modeling of the noise for the depth value of each pixel of the depth image as the multiple of the inverse of the reflectivity *A* of a relevant pixel and the proportional constant *C*. The noise model generated in the noise model generating unit 157 may represent the noise for the depth value of each pixel of the depth image, and have values varying per pixel. The noise prediction unit 150 may use the noise model generated in the noise model generating unit 157 as the noise for the depth value of each pixel of the depth image.

Referring to FIG. 1 again, the noise elimination unit 160 may eliminate the noise of the depth image by considering the noise predicted in the noise prediction unit 150. The noise elimination unit 160 may adaptively perform filtering of each pixel of the depth image by considering the noise of each pixel predicted in the noise prediction unit 150. The noise elimination unit 160 may use an image filter to eliminate the noise of the depth image. The image filter may apply the filtering method of non-local means, and in this case, filtering may be performed by considering the noise predicted in the noise prediction unit 150.

FIG. 5 is a flowchart of the method of decreasing noise of the depth image. Descriptions of the image generating apparatus 100 above may be applied to the method of decreasing noise of the depth image according to an embodiment of the present disclosure, though omitted.

The image processing apparatus 120 may obtain the intensity image representing the reflectivity of the subject and the depth image thereof S510. The depth image represents the distance between the image pickup apparatus 110 and the subject 190.

The image processing apparatus 120 may predict the noise of each pixel of the depth image, using the difference between the depth values of two adjacent pixels of the obtained depth image and the reflectivity of each pixel of the intensity image S520. Here, the difference between depth values of two adjacent pixels may follow the Gaussian distribution.

The image processing apparatus 120 may predict the noise of each pixel of the depth image by setting different weighted values depending on the difference between the depth values of two adjacent pixels. In detail, when the difference in the depth values of two adjacent pixels becomes bigger, in other words, when the similarity between depth values of adjacent pixels becomes lower, the weighted value may be set as low, and when the difference in the depth values of two adjacent pixels becomes smaller, the weighted value may be set as high to predict the noise of each pixel of the depth image.

The image processing apparatus 120 may predict the noise of each pixel of the depth image, using only both the depth image and the intensity image corresponding thereto.

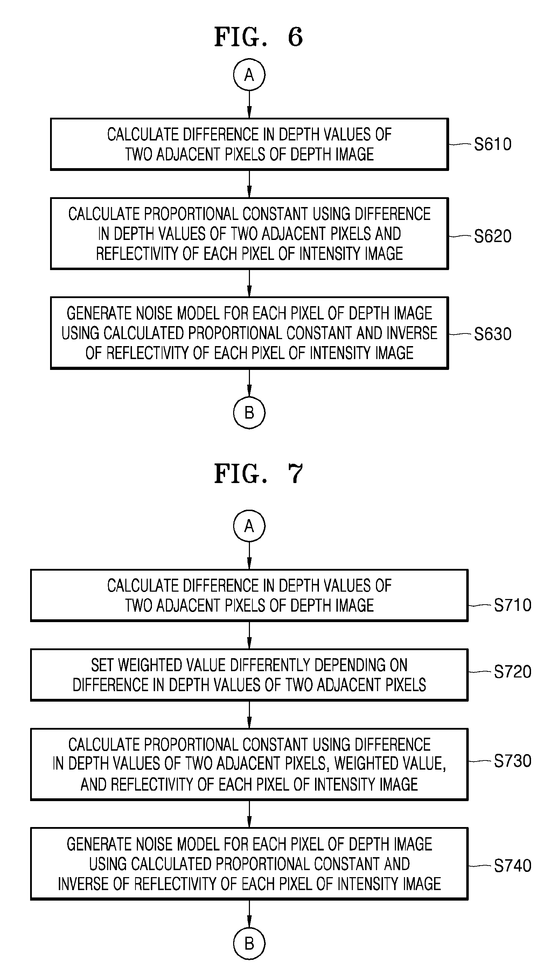

FIG. 6 is a detailed flowchart of predicting the noise of each pixel of the depth image in the method of decreasing noise of the depth image according to one or more embodiments.

The noise prediction unit 150 calculates the difference between the depth values of two adjacent pixels of the depth image.

The noise prediction unit 150 calculates the proportional constant, using the calculated difference between the depth values of two adjacent pixels and the reflectivity of each pixel of the intensity image S620.

The noise prediction unit 150 generates the noise model for each pixel of the depth image, using the calculated proportional constant and the inverse of the reflectivity of each pixel of the intensity image S630. In detail, the noise model for each pixel of the depth image, which is predicted by the noise prediction unit 150 may be in a form of a multiple of the calculated proportional constant and the inverse of the reflectivity of each pixel of the intensity image.

FIG. 7 is a detailed flowchart of predicting the noise for each pixel of the depth image in the method of decreasing noise of the depth image, according to one or more embodiments.

The noise prediction unit 150 may calculate the difference between the depth values of two adjacent pixels of the depth image S710.

The noise prediction unit 150 may differently set the weighted values depending on the calculated difference between the depth values of two adjacent pixels S720. In detail, when the difference in the depth values of two adjacent pixels becomes bigger, the weighted value may be set as low, and when the difference in the depth values of two adjacent pixels becomes smaller, the weighted value may be set as high to predict the noise of each pixel of the depth image.

The noise prediction unit 150 may calculate the proportional constant, using the calculated difference between the depth values of two adjacent pixels, pre-set weighted value, and the reflectivity of each pixel of the intensity image S730.

The noise prediction unit 150 generates the noise model for each pixel of the depth image, using the calculated proportional constant and the inverse of the reflectivity of each pixel of the intensity image S740. In detail, the noise model for each pixel of the depth image, which is predicted by the noise prediction unit 150 may be in a form of a multiple of the calculated proportional constant and the inverse of the reflectivity of each pixel of the intensity image.

Referring back to FIG. 5, the image processing apparatus 120 may eliminate the noise of the depth image by considering the predicted noise S530. The image processing apparatus 120 may adaptively perform filtering to each pixel of the depth image by considering the predicted noise for each pixel of the depth image.

At this stage, the depth image which becomes the target to eliminate the noise may be the same image as the depth image used for the noise prediction,

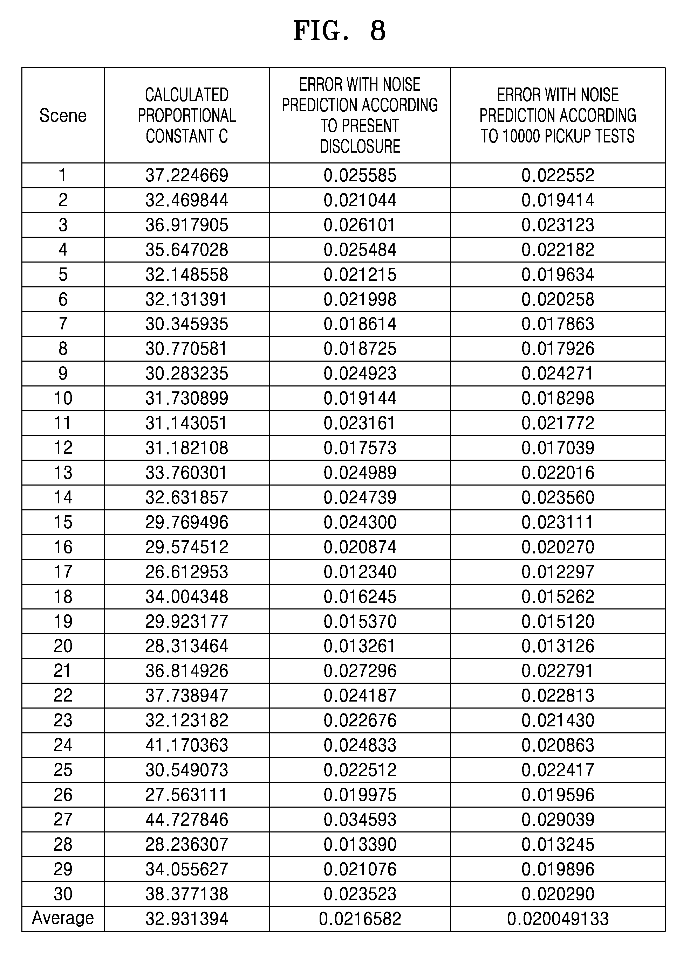

FIG. 8 is a diagram of the method of decreasing noise of the depth image or the result of noise elimination of the depth image via the image processing apparatus by using the method thereof, according to one or more embodiments.

As described above, an embodiment of the present disclosure relates to the method of decreasing noise of the depth image by predicting the noise of the depth image by using one of the depth image and one of the intensity image corresponding thereto, eliminating the noise considering the predicted noise of the depth image, and decreasing the noise of the depth image, or the image processing apparatus 120 using the method thereof, and the image generating apparatus 100. To predict the noise of the depth image, the noise for each pixel of the depth image may be expressed as the multiple of the proportional constant *C* and the inverse of the reflectivity *A* of each pixel of the intensity image.

FIG. 8 illustrates the error of the depth image between the calculation result of the proportional constant *C* per the calculation method according to an embodiment of the present disclosure for 30 scenes, and the noise thereof. Also, the errors of the depth image are compared together by applying the proportional constant *C* calculated by using ten thousand depth images obtained by ten thousand pickup tests and ten thousand intensity images. For reference, the value of the proportional constant *C* calculated by using ten thousand depth images obtained by ten thousand of pickup tests and ten thousand intensity images is 33.430. A Root Mean Square Error (RMSE) is used to calculate the error of the depth image for the noise.

Referring FIG. 8, for scene 1, the value of the proportional constant *C* calculated according to an embodiment of the present disclosure is 37.224669, and the error of the depth image for the noise thereof is 0.025585 m. On the other hand, when the proportional constant *C* calculated through ten thousand pickup tests is 33.430, the error of the depth image for the noise for scene 1 is 0.022552 m.

For scene 2, the value of the proportional constant *C* calculated according to an embodiment of the present disclosure is 32.469844, and the error of the depth image for the noise thereof is 0.021044 m. On the other hand, when the proportional constant *C* calculated through ten thousand pickup tests is 33.430, the error of the depth image for the noise for scene 2 is 0.019414 m.

For scene 3, the value of the proportional constant *C* calculated according to an embodiment of the present disclosure is 36.917905, and the error of the depth image for the noise thereof is 0.026101 m. On the other hand, when the proportional constant *C* calculated through ten thousand pickup tests is 33.430, the error of the depth image for the noise for scene 3 is 0.023123 m.

FIG. 8 shows a respective proportional constant *C* calculated in this manner for up to scene 30 according to an embodiment of the present disclosure and a respective calculated error of the depth image for the noise by applying the respective proportional constant *C*. Also, FIG. 8 shows the error of the depth image for the noise up to scene 30 at the same time, while maintaining the value of the proportional constant *C* calculated by ten thousand pickup tests as 33.430.

When the average value of each data in the table of FIG. 8 for scene 1 up to scene 30 is examined, the value of the proportional constant *C* calculated according to an embodiment of the present disclosure is 32.931394, and the value of the error of the depth image for the noise is 0.0216582 m. The proportional constant *C* calculated through ten thousand pickup tests is 33.430, and while the value of the proportional constant *C* is maintained, the error of the depth image for the noise of scenes up to 30 is shown as 0.020049133 m. The average value of the proportional constant *C* calculated according to an embodiment of the present disclosure is 32.931394, which is a similar value to the proportional constant *C* calculated through ten thousand pickup tests, or 33.430. Also, the average value of the error of the depth image for the noise according to an embodiment of the present disclosure is 0.0216582 m, which is different by approximately 1.6mm only from 0.020049133 m or the average value of the depth image for the noise when the proportional constant *C* calculated through ten thousand pickup tests is maintained as 33.430. Since a difference of 1.6mm is a level that is hardly recognized by a human-being, an effective treatment may be concluded for the noise of the depth image according to an embodiment of the present disclosure, without performing ten thousand pickup tests. Particularly, in the case of a method of searching for the proportional constant *C* through ten thousand pickup tests and eliminating the noise by using the result, when at least one part of the image pickup apparatus 110, for example, a lens, LED, or a board is replaced, there is an inconvenience in searching for the new proportional constant *C* through another ten thousand pickup tests. Also, an embodiment of the present disclosure predicts the noise of the depth image by using one depth image and one intensity image corresponding thereto, and eliminates the noise of the depth image considering the noise of the depth image, and thus, simply and swiftly decreases noise.

On the other hand, the method of decreasing noise of the depth image described above according to an embodiment of the present disclosure can be implemented as a computer program or program instructions, and can also be implemented through computer-readable code/instructions in/on a medium, e.g., a computer-readable medium, to control at least one processing element to implement any above-described embodiment. The computer-readable code can be recorded/transferred on a medium in a variety of ways, with examples of the medium including recording media, such as magnetic storage media (e.g., ROM, floppy disks, hard disks, etc.) and optical recording media (e.g., CD-ROMs or DVDs). The media may also include, alone or in combination with the program instructions, data files, data structures, and the like.

Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa. Any one or more of the software modules described herein may be executed by a dedicated hardware-based computer or processor unique to that unit or by a hardware-based computer or processor common to one or more of the modules. The described methods may be executed on a general purpose computer or processor or may be executed on a particular machine such as the image processing apparatus for decreasing noise of a depth image representing the distance between an image pickup apparatus and a subject described herein.

It should be understood that the exemplary embodiments described therein should be considered in a descriptive sense only and not for purposes of limitation. Descriptions of features or aspects within each embodiment should typically be considered as available for other similar features or aspects in other embodiments. While a few embodiments of the present disclosure have been described with reference to the figures, it will be understood by those of ordinary skill in the art that various changes in form and details may be made therein without departing from the scope of the present disclosure as defined by the following claims.

**Claims**

1. A method for decreasing noise of a depth image representing a distance between an image pickup apparatus and a subject, the method comprising:

   acquiring an intensity image representing a reflectivity of the subject;
   acquiring the depth image corresponding to the intensity image;
   predicting noise for each pixel of the depth image using a difference in depth values of two adjacent pixels of the acquired depth image and a reflectivity of each pixel of the intensity image; and

eliminating the noise of the depth image by considering the predicted noise.

2. The method of claim 1, wherein the step of predicting noise for each pixel of the depth image comprises predicting the noise for each pixel of the depth image by setting a weighted value depending on the difference of depth values of the two adjacent pixels.

3. The method of claim 2, wherein the step of predicting noise for each pixel of the depth image comprises predicting the noise for each pixel of the depth image by decreasing the weighted value when the difference in the depth values of the two adjacent pixels becomes bigger, and increasing the weighted value when the difference in the depth values of the two adjacent pixels becomes smaller.

4. The method of any preceding claim, wherein the step of predicting noise for each pixel of the depth image comprises predicting the noise for each pixel of the depth image by using both the depth image and the intensity image corresponding to the depth image.

5. The method of any preceding claim, wherein the depth image used for predicting the noise and the depth image used for eliminating the noise are the same.

6. The method of any preceding claim, wherein the difference in the depth values of two adjacent pixels follows a Gaussian distribution.

7. The method of any preceding claim, wherein the step of predicting noise comprises:

calculating a difference in the depth values of two adjacent pixels;
calculating a proportional constant by using the calculated difference in the depth values of the two adjacent pixels and the reflectivity of each pixel of the intensity image; and
generating a noise model for each pixel of the depth image by using the calculated proportional constant and the inverse of the reflectivity of each pixel of the intensity image.

8. The method of claim 7, wherein the step of predicting noise further comprises setting a weighted value depending on the calculated difference in the depth values of the two adjacent pixels, and
wherein the calculating of the proportional constant comprises calculating the proportional constant further using the weighted value.

9. The method of any preceding claim, wherein the step of eliminating the noise comprises eliminating the noise by adaptively performing filtering for each pixel of the depth image based on the predicted noise of each pixel.

10. A computer program comprising computer program code means adapted to perform all of the steps of any of claims 1 to 9 when said program is run on a computer.

11. A computer program as claimed in claim 10 embodied on a computer-readable medium.

12. An image processing apparatus for decreasing noise of a depth image representing the distance between an image pickup apparatus and a subject, the image processing apparatus comprising:

an intensity acquisition unit to acquire intensity image representing the reflectivity of the subject;
a depth image acquisition unit to acquire the depth image corresponding to the intensity image;
a noise prediction unit to predict noise of each pixel of the depth image by using the difference in the depth values of two adjacent pixels of the acquired depth image and the reflectivity of each pixel of the intensity image; and
a noise elimination unit to eliminate the noise of the depth image considering the predicted noise.

13. The image processing apparatus of claim 12, wherein the noise prediction unit comprises:

a depth value calculation unit to calculate a difference in the depth values of two adjacent pixels of the depth image;
a proportional constant calculation unit to calculate a proportional constant by using the calculated difference in the depth values of the two adjacent pixels and the reflectivity of each pixel of the intensity image; and

a noise model generating unit to generate a noise model for each pixel of the depth image by using the calculated proportional constant and the inverse of the reflectivity of each pixel of the intensity image.

14. The image processing apparatus of claim 13, wherein the noise prediction unit further comprises a weighted value setting unit to set a weighted value depending on the difference in the depth values of the two adjacent pixels, and the proportional constant calculation unit to calculate the proportional constant further using the weighted value.

15. An image generating apparatus comprising:

an image pickup apparatus detecting an image signal for a subject from a return reflection beam reflected after a predetermined beam is irradiated to the subject; and
an image processing apparatus according to any of claims 12 to 14.

# FIG. 1

# FIG. 2

150

| 151 | 155 |
|---|---|
| DEPTH VALUE CALCULATION UNIT | PROPORTIONAL CONSTANT CALCULATION UNIT |
| 153 | 157 |
| WEIGHTED VALUE SETTING UNIT | NOISE MODEL GENERATING UNIT |

# FIG. 3

200

| $D_1$ | $D_2$ |
|---|---|
| $D_3$ | $D_4$ |
| $D_5$ | $D_6$ |

# FIG. 4

# FIG. 5

# FIG. 6

(A)

↓

| CALCULATE DIFFERENCE IN DEPTH VALUES OF TWO ADJACENT PIXELS OF DEPTH IMAGE | S610 |

↓

| CALCULATE PROPORTIONAL CONSTANT USING DIFFERENCE IN DEPTH VALUES OF TWO ADJACENT PIXELS AND REFLECTIVITY OF EACH PIXEL OF INTENSITY IMAGE | S620 |

↓

| GENERATE NOISE MODEL FOR EACH PIXEL OF DEPTH IMAGE USING CALCULATED PROPORTIONAL CONSTANT AND INVERSE OF REFLECTIVITY OF EACH PIXEL OF INTENSITY IMAGE | S630 |

↓

(B)

# FIG. 7

(A)

↓

| CALCULATE DIFFERENCE IN DEPTH VALUES OF TWO ADJACENT PIXELS OF DEPTH IMAGE | S710 |

↓

| SET WEIGHTED VALUE DIFFERENTLY DEPENDING ON DIFFERENCE IN DEPTH VALUES OF TWO ADJACENT PIXELS | S720 |

↓

| CALCULATE PROPORTIONAL CONSTANT USING DIFFERENCE IN DEPTH VALUES OF TWO ADJACENT PIXELS, WEIGHTED VALUE, AND REFLECTIVITY OF EACH PIXEL OF INTENSITY IMAGE | S730 |

↓

| GENERATE NOISE MODEL FOR EACH PIXEL OF DEPTH IMAGE USING CALCULATED PROPORTIONAL CONSTANT AND INVERSE OF REFLECTIVITY OF EACH PIXEL OF INTENSITY IMAGE | S740 |

↓

(B)

# FIG. 8

| Scene | CALCULATED PROPORTIONAL CONSTANT C | ERROR WITH NOISE PREDICTION ACCORDING TO PRESENT DISCLOSURE | ERROR WITH NOISE PREDICTION ACCORDING TO 10000 PICKUP TESTS |
|---|---|---|---|
| 1 | 37.224669 | 0.025585 | 0.022552 |
| 2 | 32.469844 | 0.021044 | 0.019414 |
| 3 | 36.917905 | 0.026101 | 0.023123 |
| 4 | 35.647028 | 0.025484 | 0.022182 |
| 5 | 32.148558 | 0.021215 | 0.019634 |
| 6 | 32.131391 | 0.021998 | 0.020258 |
| 7 | 30.345935 | 0.018614 | 0.017863 |
| 8 | 30.770581 | 0.018725 | 0.017926 |
| 9 | 30.283235 | 0.024923 | 0.024271 |
| 10 | 31.730899 | 0.019144 | 0.018298 |
| 11 | 31.143051 | 0.023161 | 0.021772 |
| 12 | 31.182108 | 0.017573 | 0.017039 |
| 13 | 33.760301 | 0.024989 | 0.022016 |
| 14 | 32.631857 | 0.024739 | 0.023560 |
| 15 | 29.769496 | 0.024300 | 0.023111 |
| 16 | 29.574512 | 0.020874 | 0.020270 |
| 17 | 26.612953 | 0.012340 | 0.012297 |
| 18 | 34.004348 | 0.016245 | 0.015262 |
| 19 | 29.923177 | 0.015370 | 0.015120 |
| 20 | 28.313464 | 0.013261 | 0.013126 |
| 21 | 36.814926 | 0.027296 | 0.022791 |
| 22 | 37.738947 | 0.024187 | 0.022813 |
| 23 | 32.123182 | 0.022676 | 0.021430 |
| 24 | 41.170363 | 0.024833 | 0.020863 |
| 25 | 30.549073 | 0.022512 | 0.022417 |
| 26 | 27.563111 | 0.019975 | 0.019596 |
| 27 | 44.727846 | 0.034593 | 0.029039 |
| 28 | 28.236307 | 0.013390 | 0.013245 |
| 29 | 34.055627 | 0.021076 | 0.019896 |
| 30 | 38.377138 | 0.023523 | 0.020290 |
| Average | 32.931394 | 0.0216582 | 0.020049133 |

Europäisches
Patentamt
European
Patent Office
Office européen
des brevets

# EUROPEAN SEARCH REPORT

Application Number

EP 14 18 7122

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FRANK LENZEN ET AL: "Denoising Time-Of-Flight Data with Adaptive Total Variation", 26 September 2011 (2011-09-26), ADVANCES IN VISUAL COMPUTING, SPRINGER BERLIN HEIDELBERG, BERLIN, HEIDELBERG, PAGE(S) 337 - 346, XP019166030, ISBN: 978-3-642-24027-0 | 1-6, 9-12,15 | INV. G06T5/00 |
| A | * section 1, line 5 - line 8; figure 1 * <br> * section 3, lines 1-4 and equation 1 * <br> * section 3.1, first and last paragraph * <br> * page 7, paragraph 1 * <br> * figure 5 * | 7,8,13, 14 | |
| X | EP 2 538 242 A1 (SOFTKINETIC SOFTWARE [BE]) 26 December 2012 (2012-12-26) | 1-6, 9-12,15 | |
| A | * abstract * <br> * paragraph [0026] * <br> * paragraphs [0036], [0042] * <br> * paragraph [0043] * | 7,8,13, 14 | |
| A | LJUBOMIR JOVANOV ET AL: "Fuzzy logic-based approach to wavelet denoising of 3D images produced by time-of-flight cameras", OPTICS EXPRESS, vol. 18, no. 22, 25 October 2010 (2010-10-25), pages 22651-22676, XP055169693, ISSN: 1094-4087, DOI: 10.1364/OE.18.022651 * section 2.2 * * section 3 * | 1-15 | TECHNICAL FIELDS SEARCHED (IPC) <br><br> G06T <br> H04N <br> G01S |

The present search report has been drawn up for all claims

| Place of search | Date of completion of the search | Examiner |
|---|---|---|
| Munich | 13 February 2015 | Kollreider, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 14 18 7122

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2015

| Patent document cited in search report | Publication date | Patent family member(s) | Publication date |
|---|---|---|---|
| EP 2538242        A1 | 26-12-2012 | CN    103814306 A | 21-05-2014 |
|  |  | EP      2538242 A1 | 26-12-2012 |
|  |  | JP   2014524016 A | 18-09-2014 |
|  |  | KR  20140027468 A | 06-03-2014 |
|  |  | US  2014253679 A1 | 11-09-2014 |
|  |  | WO  2012175731 A1 | 27-12-2012 |

EPO FORM P0459

For more details about this annex : see Official Journal of the European Patent Office, No. 12/82